# EUROPEAN PATENT SPECIFICATION

(11) **EP 3 064 306 B1**
(45) Date of publication and mention of the grant of the patent: **25.07.2018**
(21) Application number: 14857107.8
(22) Date of filing: 01.10.2014
(51) Int. Cl.: B23K 20/12, B23K 20/16, B23K 103/18, B23K 20/233, B23K 103/10

(54) **FRICTION STIR WELDING DEVICE AND METHOD FOR MANUFACTURING METAL STRUCTURE**
REIBRÜHRSCHWEISSVORRICHTUNG UND VERFAHREN ZUR HERSTELLUNG EINER METALLSTRUKTUR
DISPOSITIF DE SOUDAGE PAR FRICTION-MALAXAGE ET PROCÉDÉ DE FABRICATION DE STRUCTURE MÉTALLIQUE

(30) Priority: 01.11.2013 JP 2013228635
(43) Date of publication of application: 07.09.2016
(73) Proprietor: Kawasaki Jukogyo Kabushiki Kaisha, Kobe-shi, Hyogo 650-8670 (JP)
(72) Inventor: NISHIDA, Hidehito, Akashi-shi Hyogo 673-8666 (JP); YOSHIKAWA, Syuhei, Kakamigahara-shi Gifu 504-8710 (JP); KAMIMUKI, Kenichi, Kakamigahara-shi Gifu 504-8710 (JP); OKADA, Hideki, Kakamigahara-shi Gifu 504-8710 (JP); ORIBE, Hiroki, Kakamigahara-shi Gifu 504-8710 (JP)
(74) Representative: Leinweber & Zimmermann
(86) International application number: PCT/JP2014/005023
(87) International publication number: WO 2015/064012

(56) References cited:
- JP-A- 2004 042 095
- JP-A- 2007 044 755
- JP-A- 2007 111 716
- JP-A- 2011 079 031

## Description

### Technical Field

The present invention relates to a friction stir welding apparatus that performs friction stir welding on an inner corner portion that is formed by two metal members butted together, and also relates to a method of manufacturing a metal structure by using the friction stir welding apparatus.

### Background Art

Conventionally, friction stir welding (FSW) has been known as a method of joining metal members together. In the friction stir welding, a stirring pin provided at the distal end of a rotary tool is, while being rotated, pressed against a joining target portion formed by two metal members to soften the joining target portion and its vicinity by frictional heat and stir the softened joining target portion and its vicinity, thereby causing a plastic flow, and then the joining target portion is removed from the rotary tool and cooled down. In this manner, the two metal members are joined together.

Patent Literature 1 describes a rotary tool intended for an inner corner. The rotary tool is used for performing friction stir welding on an inner corner portion that is formed by two metal members butted together. The rotary tool includes: a stirring pin that is press-fitted into the inner corner portion formed by the two metal members butted together; and a shoulder block that supports the stirring pin in a rotatable manner and that comes into contact with each of the two metal members. The shoulder block includes: a body; a shoulder detachably provided on the body; and a through-hole extending through the body and the shoulder. In the case of performing friction stir welding using the rotary tool intended for an inner corner, first, the shoulder block is set on the inner corner portion formed by the two metal members butted together; next, the stirring pin is inserted in the through-hole of the shoulder block; and then the shoulder block and the stirring pin are moved along a line of the inner corner portion while rotating and pressing the stirring pin against the inner corner portion.

Patent Literature 2 describes: placing a wire along an inner corner portion that is formed by two metal members butted together; and stirring the base material of the inner corner portion and the wire together by using a stirring pin to which a shoulder is attached, thereby performing friction stir welding on the inner corner portion. On the inner corner portion on which the friction stir welding is performed, a fillet is formed by the wire that is friction-stirred together with the base material of the inner corner portion.

### Citation List

### Patent Literature

PTL 1: Japanese Laid-Open Patent Application Publication No. 2011-79031
PTL 2: Japanese Laid-Open Patent Application Publication No. 2013-166159

### Summary of Invention

### Technical Problem

As described in Patent Literature 1 and Patent Literature 2, at the time of performing friction stir welding on an inner corner portion that is formed by two metal members butted together, if the shoulder (or the shoulder block) does not rotate, the heat input into the joining target portion is less than that in a case where the shoulder rotates together with the stirring pin. Accordingly, particularly in a case where the wire is friction-stirred together with the base material of the joining target portion, insufficient softening of the base material of the inner corner portion and the wire may be caused due to such insufficient heat input. In this case, defects may occur on the surface of the inner corner portion on which the friction stir welding has been performed since the base material of the inner corner portion and the wire have not been stirred sufficiently.

The present invention has been made in view of the above conventional problems. An object of the present invention is to: provide a friction stir welding apparatus capable of performing friction stir welding on an inner corner portion that is formed by two metal members butted together; and, in a method of manufacturing a metal structure by using the friction stir welding apparatus, feed a wire to a joining target portion (the inner corner portion) in such a manner that the base material of the joining target portion and the wire are friction-stirred favorably.

JP 2011-079031 A discloses a friction stir welding apparatus according to the preamble of claim 1.

JP 2004-042095 A discloses the use of a wire heating device to feed a heated wire to a joint.

### Solution to Problem

A friction stir welding apparatus according to the present invention has the features of claim 1. It is a friction stir welding apparatus for performing friction stir welding on an inner corner portion that is formed by two metal members butted together. The friction stir welding apparatus includes: a rotary tool provided with a stirring pin at its distal end; a shoulder in which the rotary tool is inserted, the shoulder coming into contact with the two metal members; a rotation driving unit that causes the rotary tool to rotate about an axis; a pressing device that presses the rotary tool and the shoulder against the inner corner portion; a moving device that moves the rotary tool and the shoulder in an advancing direction along the inner corner portion; and a wire heating device that heats a wire that is friction-stirred together with the two metal members by the stirring pin.

According to the friction stir welding apparatus with the above-described configuration, the preheated wire is friction-stirred together with the base material of a joining target portion. This makes it possible to prevent insufficient softening of the base material of the joining target portion and the wire due to insufficient heat input into the base material of the joining target portion and the wire. Since the base material of the joining target portion and the wire are softened sufficiently, the base material of the joining target portion and the wire can be friction-stirred favorably. Moreover, since the wire is preheated, the necessary heat input for softening the wire is reduced, which makes it possible to increase the joining speed.

Preferably, the above-described friction stir welding apparatus further includes a wire feeder that feeds the wire to a joining target portion of the two metal members. Preferably, the wire heating device is configured to heat the wire that is fed to the joining target portion by the wire feeder. This configuration makes it possible to continuously feed the heated wire to the joining target portion.

It should be noted that the wire heating device may be configured to heat the wire by applying an electric current to the wire. Alternatively, the wire heating device may be configured to heat the wire by electromagnetic induction. Further alternatively, the wire heating device may be configured to heat the wire by a heating element.

In the above-described friction stir welding apparatus, the shoulder includes: an insertion hole in which the rotary tool is inserted; two shoulder surfaces that are provided on both sides, respectively, of an opening of the insertion hole in a direction substantially perpendicular to the advancing direction, the two shoulder surfaces forming an angle that corresponds to an angle, formed by the two metal members, of the inner corner portion; and a guide groove intended for the wire, the guide groove extending parallel to the advancing direction and being formed in a front ridge portion where the two shoulder surfaces meet, the front ridge portion being positioned forward from the opening of the insertion hole in the advancing direction.

According to the above-described configuration, the wire is fed to the joining target portion while being guided by the guide groove, and thereby the wire is prevented from moving away from the joining target portion or buckling. In this manner, the wire is stably fed to the joining target portion.

In the above-described friction stir welding apparatus, preferably, the front ridge portion is more recessed from the inner corner portion than a rear ridge portion where the two shoulder surfaces meet, the rear ridge portion being positioned rearward from the opening of the insertion hole in the advancing direction, and a cross-sectional shape of the rear ridge portion in the advancing direction corresponds to a cross-sectional shape of the inner corner portion in the advancing direction after the friction stir welding has been performed on the inner corner portion. According to this configuration, the wire is fed to the joining target portion in such a manner that the feeding of the wire is not hindered by the shoulder or the base material. The rear ridge portion comes into contact with the base material after the base material has been stirred, and thereby the shape of the surface of the base material that has been stirred is trimmed.

In the above-described friction stir welding apparatus, desirably, the front ridge portion is inclined away from the inner corner portion forward in the advancing direction. Here, desirably, a size of the front ridge portion in a depth direction of the guide groove from one end to another end of the front ridge portion in the advancing direction is greater than a depth of the guide groove. This configuration makes it possible to prevent the wire from being snagged on the shoulder.

The above-described friction stir welding apparatus may further include a base to which the shoulder is detachably mounted, the base including a hole that is continuous with the insertion hole of the shoulder. According to this configuration, the shoulder, which degrades relatively easily, can be independently detached from the base for replacement.

A method of manufacturing a metal structure according to the present invention is provided according to claim 10 and includes: butting a first metal member and a second metal member together in an L shape or in a T shape; heating a wire; feeding the heated wire to an inner corner portion that is formed by the first metal member and the second metal member butted together; and press-fitting a stirring pin that is rotating into the inner corner portion to join the first metal member, the second metal member, and the wire together by friction stir welding.

According to the above-described method of manufacturing a metal structure, the preheated wire is friction-stirred together with the base material of a joining target portion. This makes it possible to prevent insufficient softening of the base material of the joining target portion and the wire due to insufficient heat input into the base material of the joining target portion and the wire. Since the base material of the joining target portion and the wire are softened sufficiently, the base material of the joining target portion and the wire can be friction-stirred favorably. As a result, defects can be prevented from occurring on the surface of a friction stir weld of the metal structure. Moreover, since the wire is preheated, the necessary heat input for softening the wire is reduced, which makes it possible to increase the joining speed.

In the heating of the wire, for example, the wire can be heated by applying an electric current to the wire, or the wire can be heated by electromagnetic induction, or the wire can be heated by a heating element.

In the above-described method of manufacturing a metal structure, for example, the first metal member may be made of an aluminum alloy of A2000 series; the second metal member may be made of an aluminum alloy of A7000 series; and the wire may be made of an aluminum alloy of A2000 series or an aluminum alloy of A7000 series.

### Advantageous Effects of Invention

According to the present invention, since the preheated wire is fed to the joining target portion, the base material of the joining target portion and the wire can be suitably softened by heat input into the joining target portion by the stirring pin. As a result, the base material of the joining target portion and the wire are friction-stirred favorably.

### Brief Description of Drawings

FIG. 1 shows a state where an inner corner portion that is formed by two metal members butted together is being stirred by a rotary tool.
FIG. 2 shows a schematic configuration of a friction stir welding apparatus according to one embodiment of the present invention.
FIG. 3 is a sectional view of a shoulder block in an advancing direction.
FIG. 4 shows a shoulder seen in a direction perpendicular to the advancing direction.
FIG. 5 is a view seen in the direction of an arrow V of FIG. 4.
FIG. 6 is a view seen in the direction of an arrow VI of FIG. 4.
FIG. 7 is a view seen in the direction of an arrow VII of FIG. 4.
FIG. 8 illustrates the shoulder seen in the advancing direction, showing one variation of a guide groove of the shoulder.
FIG. 9 is a flowchart showing a method of manufacturing a metal structure by using the friction stir welding apparatus.
FIG. 10 shows a schematic configuration of the friction stir welding apparatus including a wire heating device according to one variation.

### Description of Embodiments

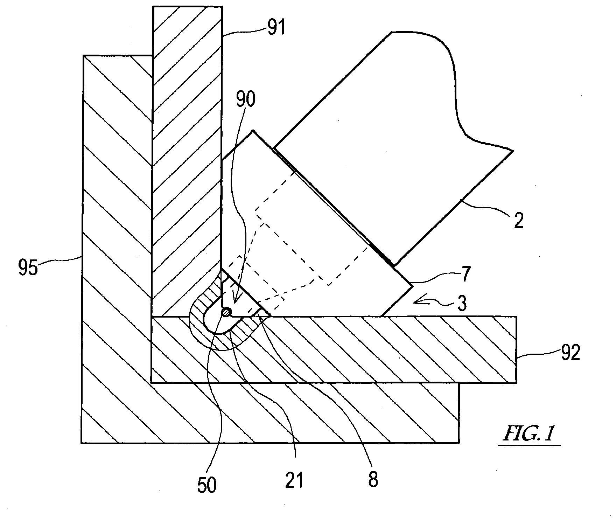

Hereinafter, a friction stir welding apparatus 1 and a method of manufacturing a metal structure according to one embodiment of the present invention are described with reference to the drawings. FIG. 1 shows a state where an inner corner portion 90, which is formed by two metal members 91 and 92 butted together, is being stirred by a rotary tool 2. As shown in FIG. 1, the friction stir welding apparatus 1 according to the present embodiment is an apparatus that performs friction stir welding on the inner corner portion 90, which is formed by the first member 91 and the second member 92 butted together in an L shape or T shape. By using the friction stir welding apparatus 1, a metal structure including the first member 91 and the second member 92 joined together by the friction stir welding can be manufactured.

The first member 91 and the second member 92, which are joining target members, may be made of the same metal material or may be made of different metal materials from each other, so long as the first member 91 and the second member 92 are made of metal materials that can be joined together by friction stir welding. In a case where the first member 91 and the second member 92 are made of different metal materials from each other, the first member 91 may be made of an aluminum alloy of A2000 series, and the second member 92 may be made of an aluminum alloy of A7000 series, for example. In this case, desirably, a wire 50 to be friction-stirred together with the joining target members 91 and 92 is made of the aluminum alloy of A2000 series or the aluminum alloy of A7000 series.

The aluminum alloy of A2000 series is an aluminum-copper based alloy containing 3.5 % or more of copper. The aluminum alloy of A7000 series is an aluminum-zinc-magnesium-copper based alloy. The aluminum alloy of A7000 series has significantly higher tensile strength and hardness than the aluminum alloy of A2000 series. However, the aluminum alloy of A7000 series is inferior to the aluminum alloy of A2000 series in terms of fatigue strength and fracture toughness. Accordingly, in order to improve the fatigue strength and fracture toughness of a structure, there is a case where the aluminum alloy of A2000 series is disposed on the outer side surface of the structure, and the aluminum alloy of A7000 series is combined, as an internal reinforcing member, with the aluminum alloy of A2000 series to form a T shape. By joining the member made of the aluminum alloy of A2000 series and the member made of the aluminum alloy of A7000 series together by friction stir welding using the friction stir welding apparatus 1 according to the present embodiment, these members can be directly joined together with no connecting members such as rivets in between them. This makes it possible to improve the fatigue strength and fracture toughness and reduce the cost and weight.

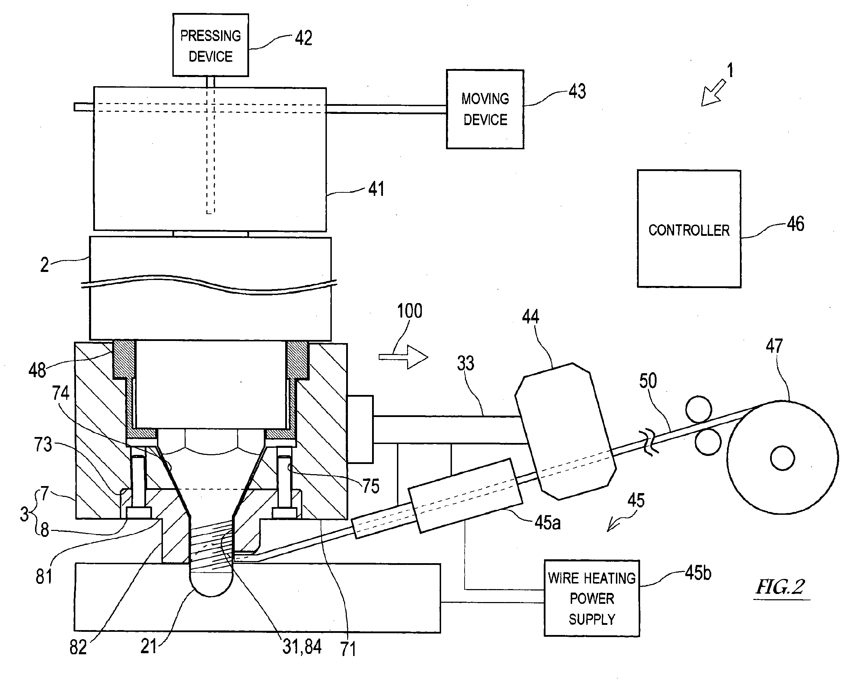

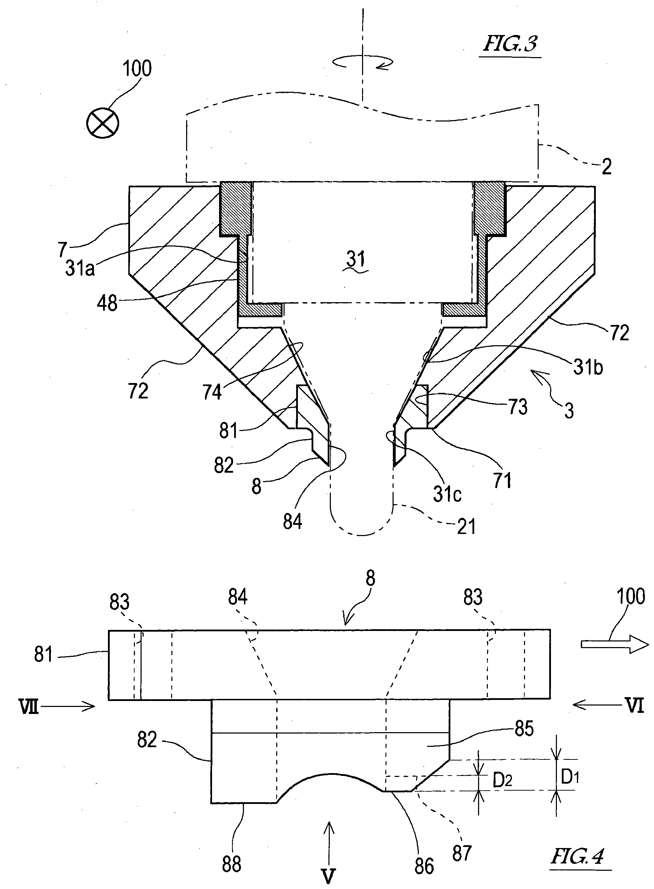

Next, the configuration of the friction stir welding apparatus 1 is described in detail. FIG. 2 shows a schematic configuration of the friction stir welding apparatus 1 according to the embodiment of the present invention. FIG. 2 shows a sectional view of a shoulder block 3 in a direction perpendicular to an advancing direction 100. FIG. 3 is a sectional view of the shoulder block 3 in the advancing direction. In FIG. 3, the rotary tool 2 is indicated by two-dot chain lines.

As shown in FIG. 2 and FIG. 3, the friction stir welding apparatus 1 according to the present embodiment, shown schematically, includes: the rotary tool 2, which is provided with a stirring pin 21 at its distal end; the shoulder block 3, which is attached to the rotary tool 2; a rotation driving unit 41, which drives the rotary tool 2 to rotate; a pressing device 42, which presses the rotary tool 2 such that the stirring pin 21 is pushed into the base material of a joining target portion with predetermined push-in force; a moving device 43 of the rotary tool 2; a wire feeder 44; a wire heating device 45; and a controller 46, which controls the operation of the friction stir welding apparatus 1. The joining target members 91 and 92 are held, for example, by a jig 95 shown in FIG. 1 so that the joining target members 91 and 92 can receive the pressing force from the rotary tool 2.

The moving device 43 is means for moving the rotary tool 2 and the shoulder block 3 relative to the first member 91 and the second member 92 along a butting line of the inner corner portion 90, the butting line being formed by the first member 91 and the second member 92 butted together. In the description herein, a direction in which the rotary tool 2 and the shoulder block 3 move is referred to as the "advancing direction 100", and the advancing direction 100 is defined as a direction extending along the butting line of the inner corner portion 90. Of the advancing direction 100, the direction that extends from the rotary tool 2 and the shoulder block 3 and in which the rotary tool 2 and the shoulder block 3 move during machining is referred to as "forward" (in FIG. 2, the direction indicated by an arrow 100). Also, of the advancing direction 100, the direction that extends from the rotary tool 2 and the shoulder block 3 reversely to the forward direction is referred to as "rearward". It should be noted that the rotary tool 2 and the shoulder block 3 advance in such a manner that the rotation direction of the rotary tool 2 and the advancing direction 100 coincide with each other, and the rotary tool 2 and the shoulder block 3 retreat in such a manner that the rotation direction of the rotary tool 2 and the advancing direction 100 are opposite to each other.

As one example, the moving device 43 can be constituted by a linear guide mechanism and a driver for the linear guide mechanism, the driver being controlled by the controller 46 (both the linear guide mechanism and the driver are not shown). It should be noted that the moving device 43 may be a robot. The moving device 43 according to the present embodiment is configured to move the rotary tool 2 relative to the joining target members 91 and 92 held by the jig 95. However, as an alternative, the moving device 43 may be configured to move the jig 95 holding the joining target members 91 and 92 relative to the rotary tool 2.

The wire feeder 44 is a means for feeding the wire 50 to a joining target portion in accordance with a joining speed. As one example, the wire feeder 44 is constituted by a servomotor controlled by the controller 46 and a feeding roller driven by the servomotor (both the servomotor and the feeding roller are not shown). In the present embodiment, the wire 50 to be fed by the wire feeder 44 to the joining target portion is wound around a wire reel 47 in a coil-like manner. However, as an alternative, the wire 50 to be fed may be cut in advance in accordance with the length of the butting line of the inner corner portion 90.

The wire heating device 45 is a means for heating the wire 50, which is friction-stirred together with the joining target members 91 and 92. The wire 50, which is fed to the joining target portion of the joining target members 91 and 92, is preheated by the wire heating device 45. The wire heating device 45 according to the present embodiment is configured to heat the wire 50, which is fed to the joining target portion by the wire feeder 44. As one example, the wire heating device 45 is constituted by a contact tip 45a and a wire heating power supply 45b. The wire heating power supply 45b supplies an electric current to the contact tip 45a and the base material. The operation of the wire heating power supply 45b is controlled by the controller 46. In the wire heating device 45, the electric current is supplied from the contact tip 45a to the wire 50 that has been guided to the contact tip 45a. By supplying the electric current to the wire 50 in this manner, the wire 50 is heated due to the resistance of the wire 50.

The wire feeder 44 and the contact tip 45a of the wire heating device 45 are mounted to a stay 33 fixed to the shoulder block 3, and move together with the shoulder block 3 in the advancing direction 100 relative to the joining target members 91 and 92. In this manner, desirably, the wire feeder 44 and the contact tip 45a of the wire heating device 45 are always positioned in the vicinity of the shoulder block 3 and the rotary tool 2 in order to stably feed the high-temperature wire 50 to the joining target portion. However, at least one of the wire feeder 44 and the wire heating device 45 may be provided independently of the shoulder block 3 and the rotary tool 2 at a position away from the shoulder block 3 and the rotary tool 2.

Hereinafter, the shoulder block 3 is described in detail. As shown in FIGS. 1 to 3, the shoulder block 3 is constituted by a shoulder 8 and a base 7, to which the shoulder 8 is detachably mounted. In this manner, the shoulder block 3 is constituted by the separate portions that are the base 7 and the shoulder 8. Therefore, the shoulder 8, which degrades relatively easily, can be independently detached from the base 7 for replacement. A cooling hole for cooling down the rotary tool 2, and a cooling medium passage through which a cooling medium flows, are formed in the shoulder block 3 although they are not shown in the drawings.

The base 7 is a hexagonal cylindrical body. When the base 7 is seen in the advancing direction 100, the external shape of the base 7 is such that two adjacent corners are cut away from a rectangle. Surfaces formed as a result of cutting away the two adjacent corners from the rectangle are guide surfaces 72. It should be noted that when the shoulder block 3 is pushed into the inner corner portion 90 by the pressing device 42, shoulder surfaces 85 described below come into contact with the joining target members 91 and 92, but the guide surfaces 72 are slightly away from the joining target members 91 and 92 in a manner to face the joining target members 91 and 92. An angle formed by the two guide surfaces 72 is set in accordance with an angle, formed by the joining target members 91 and 92, of the inner corner portion 90. In the present embodiment, the angle formed by the two guide surfaces 72 is about 90°.

A surface positioned between the two guide surfaces 72 is a mounting surface 71, to which the shoulder 8 is mounted. The mounting surface 71 is provided with a recess 73, in which the shoulder 8 is set. In the recess 73, a through-hole 74 and a plurality of mounting holes 75 (FIG. 2) are open. The mounting holes 75 are holes in which bolts for fixing the shoulder 8 to the recess 73 are inserted. A screw thread is formed on the inner surface of each mounting hole 75.

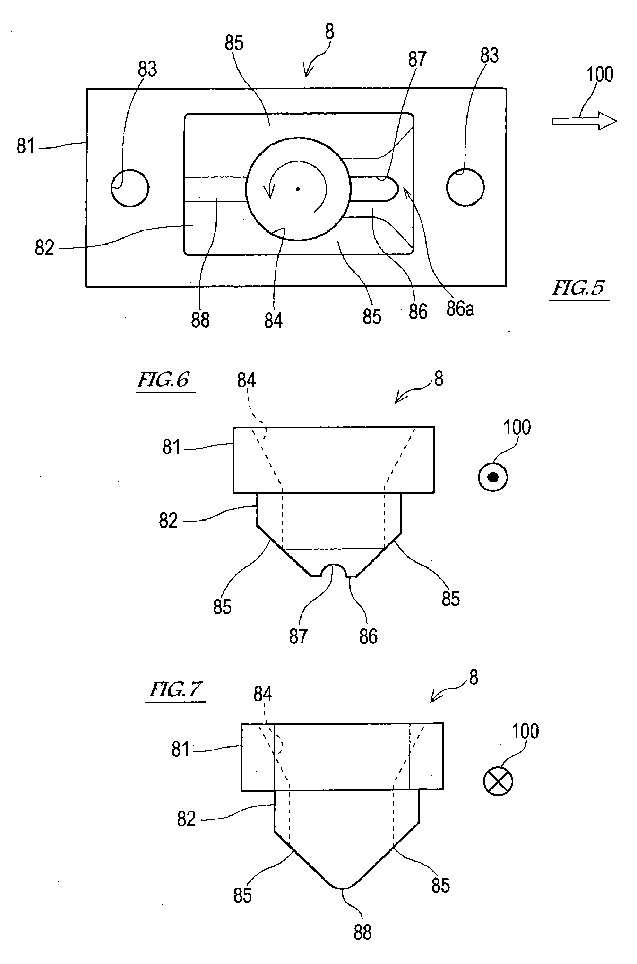

FIG. 4 shows the shoulder 8 seen in a direction perpendicular to the advancing direction 100. FIG. 5 is a view seen in the direction of an arrow V of FIG. 4. FIG. 6 is a view seen in the direction of an arrow VI of FIG. 4. FIG. 7 is a view seen in the direction of an arrow VII of FIG. 4. As shown in FIGS. 4 to 7, the shoulder 8 includes a base plate 81 and a protruding portion 82, which are formed integrally. The base plate 81 is fitted in the recess 73 of the base 7, and the protruding portion 82 protrudes from the base plate 81 toward the inner corner portion 90.

The base plate 81 is provided with mounting holes 83 corresponding to the mounting holes 75 of the base 7. In a state where the base plate 81 of the shoulder 8 is fitted in the recess 73 of the base 7, the mounting holes 75 of the base 7 and the mounting holes 83 of the shoulder 8 form continuous bolt holes. By inserting bolts in the bolt holes, the shoulder 8 is fixed to the base 7.

A through-hole 84 is open at the distal end of the protruding portion 82. The through-hole 84 extends through the base plate 81 and the protruding portion 82. In a state where the shoulder 8 is mounted to the base 7, the through-hole 74 of the base 7 and the through-hole 84 of the shoulder 8 form a single continuous insertion hole 31.

The protruding portion 82 is provided with the shoulder surfaces 85, which are formed on both sides, respectively, of the opening of the through-hole 84 in a direction substantially perpendicular to the advancing direction 100. An angle formed by the two shoulder surfaces 85 is set in accordance with the angle of the inner corner portion 90, which is formed by the joining target members 91 and 92. In the present embodiment, the angle formed by the two shoulder surfaces 85 is about 90°. When the shoulder block 3 is pushed against the inner corner portion 90, the shoulder surfaces 85 come into contact with the joining target members 91 and 92 forming the inner corner portion 90.

Ridge portions 86 and 88 are formed on the protruding portion 82 at positions where the two shoulder surfaces 85 meet. The direction in which the ridge portions 86 and 88 extend is parallel to the direction in which the inner corner portion 90 extends. The ridge portions are separated as front and rear ridge portions, with the through-hole 84 in between them, i.e., as a ridge portion positioned forward from the through-hole 84 in the advancing direction 100 (hereinafter, "front ridge portion 86") and a ridge portion positioned rearward from the through-hole 84 in the advancing direction 100 (hereinafter, "rear ridge portion 88").

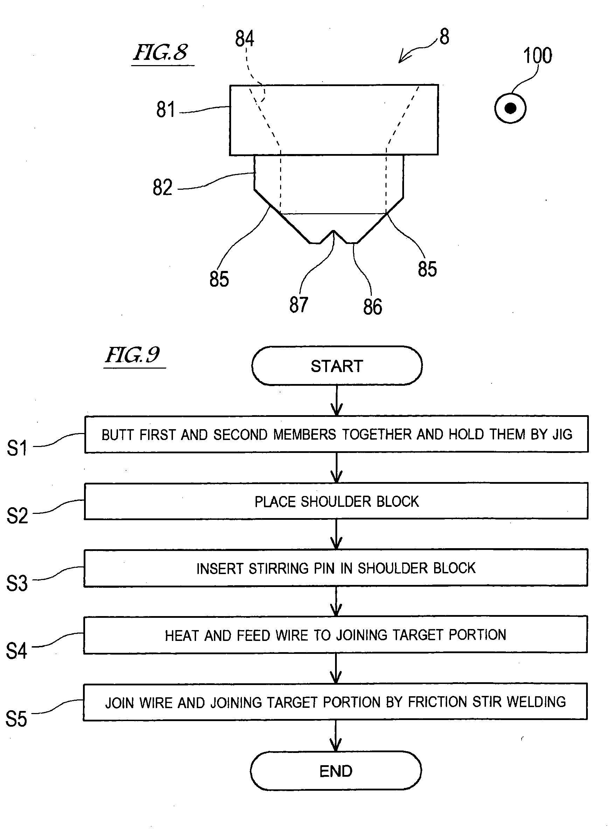

A guide groove 87, which guides the wire 50, is formed in the front ridge portion 86. The guide groove 87 extends substantially parallel to the advancing direction 100. The cross-sectional shape of the guide groove 87 according to the present embodiment in the advancing direction 100 is a semi-spherical shape. However, the cross-sectional shape of the guide groove 87 in the advancing direction 100 is not limited to a semi-spherical shape. For example, as shown in FIG. 8, the cross-sectional shape of the guide groove 87 in the advancing direction 100 may be a polygonal shape.

Conventionally, in the case of friction-stirring the base material of an inner corner portion together with a wire, the wire is placed along the inner corner portion before performing the friction stirring as described in Patent Literature 2. There may be a case where this wire is not stably fed to the joining target portion for the reason that the base material of the inner corner portion moves as a result of receiving force during the friction stirring or for the reason that the wire comes into contact with an adjacent member, such as the shoulder, and becomes buckled. In this respect, in the friction stir welding apparatus 1 according to the present embodiment, since the shoulder 8 includes the guide groove 87 for guiding the wire 50, even when the wire 50 has been softened to a certain degree due to the heating, the wire 50 is guided along the guide groove 87 and thereby prevented from moving away or buckling in the horizontal or vertical direction. In this manner, the wire 50 is stably fed to the joining target portion.

The front ridge portion 86 is inclined away from the inner corner portion 90 forward in the advancing direction 100. The inclination of the front ridge portion 86 extends from the rear end to the front end of the front ridge portion 86 in the advancing direction 100. Although the inclination of the front ridge portion 86 is gentle in the vicinity of the through-hole 84, the inclination gradually increases as the distance from the through-hole 84 increases. It should be noted that the front ridge portion 86 may be formed as either a slope or a curved surface. Thus, since the front ridge portion 86 is inclined, the movement of the shoulder 8 in the advancing direction 100 is less likely to be hindered by the inner corner portion 90.

Desirably, the size D₁ of the front ridge portion 86 in the depth direction of the guide groove 87 from the rear end to the front end of the front ridge portion 86 in the advancing direction 100 is greater than the depth D₂ of the guide groove 87 (FIG. 4). In other words, it is desirable that the position, in the depth direction of the guide groove 87, of the rear end of the front ridge portion 86 in the advancing direction 100 be away from the position, in the depth direction of the guide groove 87, of the front end of the front ridge portion 86 in the advancing direction 100 by a distance that is greater than the depth D₂ of the guide groove 87. As a result, forward from the front end of the guide groove 87 in the advancing direction 100, the inclined front ridge portion 86 (in particular, a portion indicated by an arrow 86a in FIG. 5) exists. Accordingly, while the wire 50 is passing forward from the guide groove 87 in the advancing direction 100, the wire 50 contacts the inclined front ridge portion 86. This makes it possible to prevent the wire 50 from being snagged on the shoulder 8, thereby preventing hindrance to the feeding of the wire 50.

The rear ridge portion 88 has a function of coming into contact with the base material after the base material has been stirred, thereby forming the shape of the inner corner portion 90 (e.g., a curved shape) after the friction stir welding has been performed thereon. Accordingly, the cross-sectional shape of the rear ridge portion 88 in the advancing direction 100 corresponds to the cross-sectional shape of the inner corner portion 90 in the advancing direction 100 after the friction stir welding has been performed on the inner corner portion 90. In the present embodiment, the cross-sectional shape of the rear ridge portion 88 in the advancing direction 100 is a smooth crest-like shape, such that a smooth curve connecting the first member 91 and the second member 92 is formed on the inner corner portion 90 after the friction stir welding has been performed thereon.

The front ridge portion 86 is more recessed from the inner corner portion 90 than the rear ridge portion 88. The front ridge portion 86 is spaced apart from the inner corner portion 90 so that the inner corner portion 90 and the front ridge portion 86 will not come into contact with each other and the wire 50 can be fed in between the inner corner portion 90 and the guide groove 87. On the other hand, the rear ridge portion 88 is slightly or barely spaced apart from the inner corner portion 90 so that the rear ridge portion 88 will come into contact with the inner corner portion 90 after the inner corner portion 90 has been stirred. Thus, since the front ridge portion 86 is more recessed from the inner corner portion 90 than the rear ridge portion 88, the wire 50 fed to the joining target portion is prevented from coming into contact with the front ridge portion 86 during the feeding of the wire 50.

The base 7 and the shoulder 8 with the above-described configurations are integrated together to form the shoulder block 3 in the following manner: the base plate 81 of the shoulder 8 is fitted in the recess 73 of the base 7; and bolts are screwed into the mounting holes 83 and the mounting holes 75, which coincide with each other in the axial direction. In the shoulder block 3, the through-hole 84 of the shoulder 8 and the through-hole 74 of the base 7 communicate with each other to form one insertion hole 31. The insertion hole 31 includes: a larger-diameter portion 31a including an inlet at the base 7 side; a smaller-diameter portion 31c including an outlet at the shoulder 8 side; and a tapered portion 31b smoothly connecting the larger-diameter portion 31a and the smaller-diameter portion 31c. The diameter of the smaller-diameter portion 31c is slightly greater than the diameter of the distal end of the stirring pin 21. The inclination of the tapered portion 31b relative to the axial direction coincides with the inclination of a tapered portion formed on the stirring pin 21 of the rotary tool 2. When the rotary tool 2 is inserted in the insertion hole 31 of the shoulder block 3, the tapered portion 31b of the insertion hole 31 and the tapered portion of the stirring pin come into contact with each other, and thereby the shoulder block 3 and the rotary tool 2 are positioned relative to each other. When the rotary tool 2 and the shoulder block 3 are thus positioned, the stirring pin 21 at the distal end of the rotary tool 2 is in the state of protruding from the shoulder block 3 by a predetermined length. It should be noted that a cylindrical collar 48 is provided between the larger-diameter portion 31a of the shoulder block 3 and the rotary tool 2. The collar 48 is a member provided for allowing the rotary tool 2 to stably rotate relative to the shoulder block 3.

Hereinafter, a method of manufacturing a metal structure by using the friction stir welding apparatus 1 with the above configuration is described. FIG. 9 is a flowchart showing the method of manufacturing a metal structure by using the friction stir welding apparatus.

As shown in FIG. 9, first, the first member 91 and the second member 92 are butted together in an L shape as shown in FIG. 1 or in a T shape, and the first and second members 91 and 92 are held by the jig 95, which serves as a backing member (step S1). The first member 91 and the second member 92 butted together form the inner corner portion 90, which is a joining target portion.

Next, the shoulder block 3 is placed on the inner corner portion 90 (step S2). In this step, the shoulder block 3 is placed on the inner corner portion 90 such that the shoulder surfaces 85 of the shoulder block 3 come into contact with the first and second members 91 and 92. When the shoulder block 3 is placed on the inner corner portion 90 in this manner, the front ridge portion 86 and the rear ridge portion 88 of the shoulder 8 are arranged along the butting line of the inner corner portion 90 in a manner to face the butting line.

Next, the stirring pin 21 of the rotary tool 2 is inserted in the insertion hole 31 of the shoulder block 3 (step S3). In this step, the stirring pin 21 is inserted into the insertion hole 31 until the distal end of the stirring pin 21 comes into contact with the inner corner portion 90. Then, until the tapered portion of the stirring pin 21 comes into contact with the tapered portion 31b of the shoulder block 3, the distal end of the stirring pin 21 is pushed into the base material of the joining target portion while rotating the stirring pin 21. As a result, the distal end of the stirring pin 21 is press-fitted into the base material of the joining target portion. It should be noted that, in order to reduce the resistance when the stirring pin 21 is press-fitted into the base material of the joining target portion, a prepared hole may be formed in advance in the inner corner portion 90.

Next, the stirring pin 21 and the shoulder block 3 are moved forward in the advancing direction 100 along the butting line of the inner corner portion 90 while rotating the stirring pin 21 to friction-stir the joining target portion and the wire 50 (step S5). At the same time or prior thereto, the wire 50 is fed by the wire feeder 44 to the joining target portion in accordance with the moving speed of the stirring pin 21 and the shoulder block 3 (i.e., in accordance with the joining speed). While being fed to the joining target portion, the wire 50 is heated by the wire heating device 45. That is, the preheated wire 50 is fed to the joining target portion (step S4).

The rotating stirring pin 21 gives frictional heat to the base material of the joining target portion (i.e., the first member 91 and the second member 92) and the wire 50 that has been fed to the joining target portion. The base material of the joining target portion and the wire 50 are softened by the frictional heat and stirred, and thereby a plastic flow is caused. As a result of the stirring pin 21 making the relative movement in the advancing direction 100, plasticization is sequentially caused at the inner corner portion 90, and thereby solid-phase joining of the inner corner portion 90, i.e., solid-phase joining of the first member 91 and the second member 92, is performed.

Through the steps described above, a metal structure formed by joining the first member 91 and the second member 92 together by friction stir welding is manufactured. In the above-described manufacturing method, the wire to be stirred together with the base material of the joining target portion is heated in advance. This makes it possible to prevent insufficient softening of the base material of the joining target portion and the wire 50 due to insufficient heat input into the base material of the joining target portion and the wire 50. Thus, since the wire 50 is fed to the joining target portion in such a manner that the base material of the joining target portion and the wire 50 are stirred favorably, defects can be prevented from occurring on the surface of a joint of the metal structure, which is formed by the joining by the friction stir welding. That is, the state of joining at the friction stir weld and its joining strength can be made stable. Moreover, since the wire 50 is preheated, the necessary heat input for softening the wire 50 is reduced, which makes it possible to increase the joining speed.

Although a preferred embodiment of the present invention has been described above, the configuration of the friction stir welding apparatus 1 can be modified, for example, as described below.

For example, the wire heating device 45 of the friction stir welding apparatus 1 according to the above-described embodiment is configured to heat the wire 50 by applying an electric current to the wire 50. However, the manner of heating by the wire heating device 45 is not limited to this example. As an alternative example, the wire heating device 45 may be configured to heat the wire 50 by utilizing electromagnetic induction or a heating element.

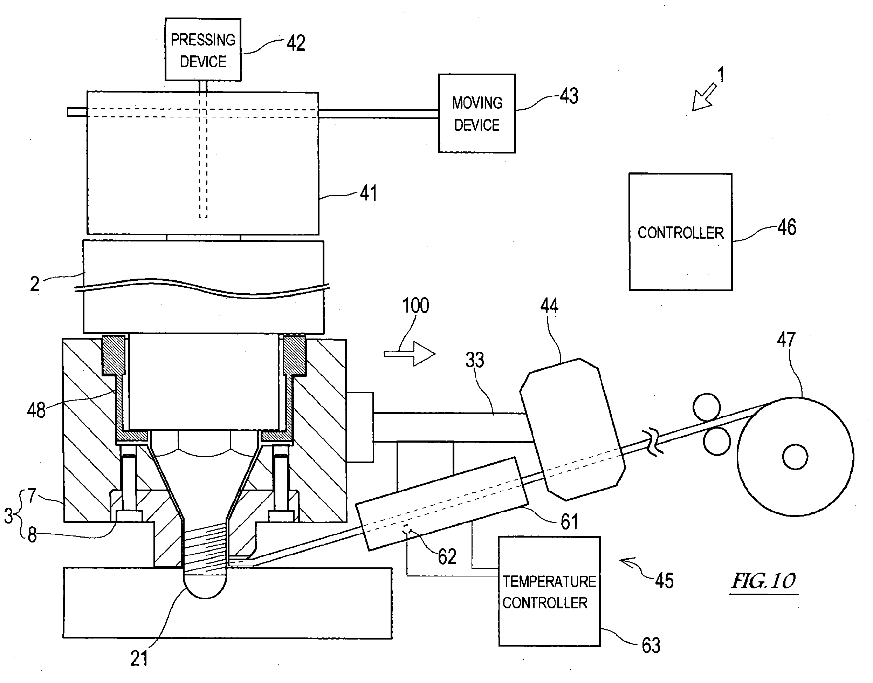

FIG. 10 shows a schematic configuration of the friction stir welding apparatus 1 including the wire heating device 45 according to Variation 1. As shown in FIG. 10, the wire heating device 45 is, for example, constituted by: a heater 61 including a coil; a temperature sensor 62, which detects the temperature of the wire 50 heated by the heater 61; and a temperature controller 63. The temperature controller 63 is configured to adjust an electric current applied to the coil of the heater 61 based on the temperature of the wire 50, which is detected by the temperature sensor 62. When the electric current flows to the coil of the heater 61, a line of magnetic force whose direction and magnitude vary is generated around the coil. The line of magnetic force causes an eddy current to flow through the wire 50. When the current flows through the wire 50, heat is generated due to the resistance of the wire 50, and thus the wire 50 generates the heat from itself. In this manner, the wire 50 is heated by electromagnetic induction. It should be noted that the above heater 61 may include a coil serving as a heating element. In this case, when an electric current flows to the coil of the heater 61, the heater 61 generates heat. The wire 50 is heated by the generated heat.

In addition, for example, the friction stir welding apparatus 1 according to the above-described embodiment includes the wire feeder 44, and actively feeds the wire 50 to the joining target portion. This configuration makes it possible to continuously feed the heated wire to the joining target portion. However, it is not essential for the friction stir welding apparatus 1 to include the wire feeder 44. In this case, the wire 50 is fed to the joining target portion in a manner to follow the movement of the rotary tool 2 and the shoulder block 3 in the advancing direction 100.

### Reference Signs List

1 friction stir welding apparatus
2 rotary tool
   21 stirring pin
3 shoulder block
   31 insertion hole
7 base
   71 mounting surface
   72 guide surface
   73 recess
   74 through-hole
   75 mounting hole
8 shoulder
   81 base plate
   82 protruding portion
   83 mounting hole
   84 through-hole
   85 shoulder surface
   86 front ridge portion
   87 guide groove
   88 rear ridge portion
41 rotation driving unit
42 pressing device
43 moving device
44 wire feeder
45 wire heating device
46 controller
50 wire
90 inner corner portion
91 first member
92 second member

## Claims

1. A friction stir welding apparatus(1) for performing friction stir welding on an inner corner portion(90) that is formed by two metal members(91,92) butted together, the friction stir welding apparatus(1) comprising:
a rotary tool(2) provided with a stirring pin(21) at its distal end;
a shoulder(8) in which the rotary tool(2) is inserted, the shoulder(8) coming into contact with the two metal members(91,92);
a rotation driving unit(41) configured to cause the rotary tool(2) to rotate about an axis;
a pressing device(42) configured to press the rotary tool(2) and the shoulder(8) against the inner corner portion(90);
a moving device(43) configured to move the rotary tool(2) and the shoulder(8) in an advancing direction along the inner corner portion (90), wherein the advancing direction is the direction extending along the butting line of the inner corner portion; **characterized by**
a wire heating device(45) configured to heat a wire(50) that is friction-stirred together with the two metal members(91,92) by the stirring pin(21), and
**characterized in that**
the shoulder(8) includes:
an insertion hole(31) in which the rotary tool(2) is inserted;
two shoulder surfaces(85,85) that are provided on both sides, respectively, of an opening of the insertion hole(31) in a direction substantially perpendicular to the advancing direction, the two shoulder surfaces(85,85) forming an angle that corresponds to an angle, formed by the two metal members(91,92), of the inner corner portion(90) and
a guide groove(87) intended for the wire(50), the guide groove(87) extending parallel to the advancing direction and being formed in a front ridge portion(86) where the two shoulder surfaces(85,85) meet, such that, in use, the front ridge portion is positioned forward from the opening of the insertion hole(31) in the advancing direction.

2. The friction stir welding apparatus(1) according to claim 1, further comprising a wire feeder(44) that feeds the wire(50) to a joining target portion of the two metal members(91,92), wherein
the wire heating device(45) is configured to heat the wire(50) that is fed to the joining target portion by the wire feeder(44).

3. The friction stir welding apparatus(1) according to claim 1 or 2, wherein
the wire heating device(45) is configured to heat the wire by applying an electric current to the wire(50).

4. The friction stir welding apparatus(1) according to claim 1 or 2, wherein
the wire heating device(45) is configured to heat the wire(50) by electromagnetic induction.

5. The friction stir welding apparatus(1) according to claim 1 or 2, wherein
the wire heating device(45) is configured to heat the wire by a heating element.

6. The friction stir welding apparatus(1) according to any one of claims 1 to 5, wherein
the front ridge portion(86) is more recessed from the inner corner portion(90) than a rear ridge portion(88) where the two shoulder surfaces(85,85) meet, the rear ridge portion(88) being positioned rearward from the opening of the insertion hole(31) in the advancing direction, and a cross-sectional shape of the rear ridge portion(88) in the advancing direction corresponds to a crosssectional shape of the inner corner portion in the advancing direction after the friction stir welding has been performed on the inner corner portion(90).

7. The friction stir welding apparatus(1) according to any one of claims 1 to 6, wherein
the front ridge portion(86) is inclined away from the inner corner portion forward in the advancing direction.

8. The friction stir welding apparatus(1) according to claim 7, wherein
a size of the front ridge portion(86) in a depth direction of the guide groove(87) from one end to another end of the front ridge portion(86) in the advancing direction is greater than a depth of the guide groove(87).

9. The friction stir welding apparatus(1) according to anyone of claims 1 to 8, further comprising a base(7) to which the shoulder(8) is detachably mounted, the base(7) including a hole that is continuous with the insertion hole(31) of the shoulder(8).

10. A method of manufacturing a metal structure, the method comprising:
butting a first metal member(91) and a second metal member(92) together in an L shape or in T shape;
heating a wire(50);
feeding the heated wire to an inner corner portion(90) that is formed by the first metal member and the second metal member butted together; and
press-fitting a stirring pin(21) that is rotating into the inner corner portion to join the first metal member, the second metal member, and the wire together by friction stir welding, **characterized in that** said method is performed by use of a friction stir welding apparatus(1) according to any of the claims 1 to 9.

11. The method of manufacturing a metal structure according to claim 10, wherein:
the first metal member is made of an aluminum alloy of A2000 series;
the second metal member is made of an aluminum alloy of A7000 series; and
the wire is made of an aluminum alloy of A2000 series or an aluminum alloy of A7000 series.

## Patentansprüche

1. Reibrührschweißvorrichtung (1) zur Durchführung von Reibrührschweißen an einem inneren Eckabschnitt (90), der gebildet wird durch zwei aneinandergefügte Metallelemente (91, 92), wobei die Reibrührschweißvorrichtung (1) umfasst:
ein Drehwerkzeug (2), das mit einem Rührstift (21) an seinem distalen Ende vorgesehen ist;
eine Schulter (8), in die das Drehwerkzeug (2) eingeführt ist, wobei die Schulter (8) mit den beiden Metallelementen (91, 92) in Kontakt kommt;
eine Drehbewegungseinheit (41), die dazu konfiguriert ist, eine Drehbewegung des Drehwerkzeugs (2) um eine Achse zu bewirken;
eine Pressvorrichtung (42), die dazu konfiguriert ist, das Drehwerkzeug (2) und die Schulter (8) gegen den inneren Eckabschnitt (90) zu pressen;
eine Bewegungsvorrichtung (43), die dazu konfiguriert ist, das Drehwerkzeug (2) und die Schulter (8) in einer Vorwärtsrichtung an dem inneren Eckabschnitt (90) entlang zu bewegen, wobei es sich bei der Vorwärtsrichtung um die Richtung handelt, die sich entlang der Zusammenfugungslinie des inneren Eckabschnitts erstreckt;
**gekennzeichnet durch** eine Drahterhitzungsvorrichtung (45), die dazu konfiguriert ist, einen Draht (50) zu erhitzen, der mit den beiden Metallelementen (91, 92) mittels Reibrühren durch den Rührstift (21) zusammengefügt wird, und
**dadurch gekennzeichnet, dass** die Schulter (8) umfasst:
ein Einführungsloch (31), in welches das Drehwerkzeug (2) eingeführt wird;
zwei Schulterflächen (85, 85), die jeweils an beiden Seiten einer Öffnung des Einführungslochs (31) in einer Richtung im Wesentlichen rechtwinklig zu der Vorwärtsrichtung vorgesehen sind, wobei die zwei Schulterflächen (85, 85) einen Winkel bilden, der einem durch die beiden Metallelemente (91, 92) des inneren Eckabschnitts (90) gebildeten Winkel entspricht; und
eine für den Draht (50) vorgesehene Führungsvertiefung (87), wobei die Führungsvertiefung (87) sich parallel zu der Vorwärtsrichtung erstreckt und in einem vorderen Stegabschnitt (86), an dem die zwei Schulterflächen (85, 85) zusammentreffen, ausgeformt ist, so dass in Verwendung der vordere Stegabschnitt von der Öffnung des Einführungslochs (31) in der Vorwärtsrichtung nach vorne angeordnet ist.

2. Reibrührschweißvorrichtung (1) gemäß Anspruch 1, die weiterhin eine Drahtzuführeinrichtung (44) umfasst, die den Draht (50) an einen Zielabschnitt zum Zusammenfügen der beiden Metallelemente (91, 92) zuführt, wobei
die Drahterhitzungsvorrichtung (45) dazu konfiguriert ist, den Draht (50) zu erhitzen, der durch die Zuführeinrichtung (44) an den Zielabschnitt zum Zusammenfügen zugeführt wird.

3. Reibrührschweißvorrichtung (1) gemäß Anspruch 1 oder 2, wobei die Drahterhitzungsvorrichtung (45) dazu konfiguriert ist, den Draht durch Anlegen einer Stromstärke an den Draht (50) zu erhitzen.

4. Reibrührschweißvorrichtung (1) gemäß Anspruch 1 oder 2, wobei die Drahterhitzungsvorrichtung (45) dazu konfiguriert ist, den Draht (50) durch Anlegen einer elektromagnetischen Induktion zu erhitzen.

5. Reibrührschweißvorrichtung (1) gemäß Anspruch 1 oder 2, wobei die Drahterhitzungsvorrichtung (45) dazu konfiguriert ist, den Draht mit einem Heizelement zu erhitzen.

6. Reibrührschweißvorrichtung (1) gemäß einem der Ansprüche 1 bis 5, wobei der vordere Stegabschnitt (86) von dem inneren Eckabschnitt (90) mehr vertieft ist als ein hinterer Stegabschnitt (88), an dem die zwei Schulterflächen (85, 85) zusammentreffen, wobei der Stegabschnitt (88) von der Öffnung des Einfuhrungslochs (31) in der Vorwärtsrichtung nach hinten angeordnet ist, und wobei die Querschnittsform des hinteren Stegabschnitts (88) in der Vorwärtsrichtung einer Querschnittsform des inneren Eckabschnitts in der Vorwärtsrichtung entspricht, nachdem das Reibrührschweißen an dem inneren Eckabschnitt (90) durchgeführt worden ist.

7. Reibrührschweißvorrichtung (1) gemäß einem der Ansprüche 1 bis 6, wobei der vordere Stegabschnitt (86) von dem inneren Eckabschnitt weg in der Vorwärtsrichtung nach vorne geneigt ist.

8. Reibrührschweißvorrichtung (1) gemäß Anspruch 7, wobei die Größe des vorderen Stegabschnitts (86) in einer Tiefenrichtung der Führungsvertiefung (87) von einem Ende zu dem anderen Ende des vorderen Stegabschnitts (86) in der Vorwärtsrichtung größer ist als die Tiefe der Führungsvertiefung (87).

9. Reibrührschweißvorrichtung (1) gemäß einem der Ansprüche 1 bis 8, die weiterhin eine Basis (7) umfasst, an der die Schulter (8) abnehmbar angebracht ist, wobei die Basis (7) ein Loch umfasst, das mit dem Einführungsloch (31) der Schulter (8) durchgehend ist.

10. Verfahren zur Herstellung einer Metallstruktur, wobei das Verfahren umfasst:
Zusammenfügen eines ersten Metallelements (91) und eines zweiten Metallelements (92) in einer L-Form oder einer T-Form;
Erhitzen eines Drahtes (50);
Zuführen des erhitzten Drahtes an einen inneren Eckabschnitt (90), der durch Zusammenfügen des ersten Metallelements und des zweiten Metallelements gebildet wird; und
Presspassen eines sich drehenden Rührstiftes (21) in den inneren Eckabschnitt, um das erste Metallelement, das zweite Metallelement und den Draht durch Reibrührschweißen zusammenzufügen, **dadurch gekennzeichnet, dass** das Verfahren unter Verwendung einer Reibrührschweißvorrichtung (1) gemäß einem der Ansprüche 1 bis 9 durchgeführt wird.

11. Verfahren zur Herstellung einer Metallstruktur gemäß Anspruch 10, wobei:
das erste Metallelement aus einer Aluminiumlegierung der Gruppe A2000 hergestellt ist;
das zweite Metallelement aus einer Aluminiumlegierung der Gruppe A7000 hergestellt ist; und
der Draht aus einer Aluminiumlegierung der Gruppe A2000 oder aus einer Aluminiumlegierung der Gruppe A7000 hergestellt ist.

## Revendications

1. Dispositif de soudage par friction-malaxage (1) permettant de réaliser un soudage par friction-malaxage sur une partie formant coin intérieur (90) constituée par deux éléments métalliques (91, 92) en butée l'un contre l'autre, le dispositif de soudage par friction-malaxage (1) comprenant :
un outil rotatif (2) doté d'un pion de malaxage (21) à son extrémité distale,
un épaulement (8) dans lequel est introduit l'outil rotatif (2), l'épaulement (8) venant en contact avec les deux éléments métalliques (91, 92),
une unité de mise en rotation (41) conçue pour amener l'outil rotatif (2) à tourner sur un axe,
un dispositif de pression (42) conçu pour presser l'outil rotatif (2) et l'épaulement (8) contre la partie formant coin intérieur (90),
un dispositif moteur (43) conçu pour mouvoir l'outil rotatif (2) et l'épaulement (8) dans un sens d'avancée le long de la partie formant coin intérieur (90), le sens d'avancée consistant en le sens longeant la ligne de butée de la partie formant coin intérieur ;
**caractérisé par**
un dispositif chauffe-fil (45) conçu pour chauffer un fil (50) qui subit un effet de friction-malaxage conjointement aux deux éléments métalliques (91, 92) par le pion de malaxage (21), et
en ce que l'épaulement (8) comprend :
un trou d'insertion (31) dans lequel est introduit l'outil rotatif (2),
deux surfaces d'épaulement (85, 85) prévues chacune sur un côté respectif d'une ouverture du trou d'insertion (31) dans un sens sensiblement perpendiculaire au sens d'avancée, les deux surfaces d'épaulement (85, 85) formant un angle correspondant à l'angle, constitué par les deux éléments métalliques (91, 92), de la partie formant coin intérieur (90), et
une rainure de guidage (87) destinée au fil (50), la rainure de guidage (87) étant parallèle au sens d'avancée et étant constituée dans une partie d'arête avant (86) où se rejoignent les deux surfaces d'épaulement (85, 85), de telle manière que, à l'usage, la partie d'arête avant est disposée en avant de l'ouverture du trou d'insertion (31) dans le sens d'avancée.

2. Dispositif de soudage par friction-malaxage (1) selon la revendication 1, comprenant en outre un dévidoir (44) qui apporte le fil (50) à une partie de joint soudé cible entre les deux éléments métalliques (91, 92), et dans lequel
le dispositif chauffe-fil (45) est conçu pour chauffer le fil (50) apporté à la partie de joint soudé cible par le dévidoir (44).

3. Dispositif de soudage par friction-malaxage (1) selon la revendication 1 ou 2, dans lequel le dispositif chauffe-fil (45) est conçu pour chauffer le fil en appliquant un courant électrique sur le fil (50).

4. Dispositif de soudage par friction-malaxage (1) selon la revendication 1 ou 2, dans lequel le dispositif chauffe-fil (45) est conçu pour chauffer le fil (50) par induction électromagnétique.

5. Dispositif de soudage par friction-malaxage (1) selon la revendication 1 ou 2, dans lequel le dispositif chauffe-fil (45) est conçu pour chauffer le fil au moyen d'une résistance chauffante.

6. Dispositif de soudage par friction-malaxage (1) selon l'une quelconque des revendications 1 à 5, dans lequel la partie d'arête avant (86) est davantage rentrée, par rapport à la partie formant coin intérieur (90), que ne l'est une partie d'arête arrière (88) où se rejoignent les deux surfaces d'épaulement (85, 85), la partie d'arête arrière (88) étant disposée en arrière de l'ouverture du trou d'insertion (31) dans le sens d'avancée, et la forme de section transversale de la partie d'arête arrière (88) dans le sens d'avancée correspond à la forme de section transversale de la partie formant coin intérieur dans le sens d'avancée après que le soudage par friction-malaxage a été effectué sur la partie formant coin intérieur (90).

7. Dispositif de soudage par friction-malaxage (1) selon l'une quelconque des revendications 1 à 6, dans lequel la partie d'arête avant (86) est inclinée en s'éloignant de la partie formant coin intérieur, vers l'avant dans le sens d'avancée.

8. Dispositif de soudage par friction-malaxage (1) selon la revendication 7, dans lequel la taille de la partie d'arête avant (86), dans le sens de la profondeur de la rainure de guidage (87) d'une extrémité à l'autre extrémité de la partie d'arête avant (86) dans le sens d'avancée, est supérieure à la profondeur de la rainure de guidage (87).

9. Dispositif de soudage par friction-malaxage (1) selon l'une quelconque des revendications 1 à 8, comprenant en outre une base (7) sur laquelle l'épaulement (8) est monté de manière amovible, la base (7) présentant un trou dans la continuité du trou d'insertion (31) de l'épaulement (8).

10. Procédé de fabrication d'une structure métallique, le procédé comprenant :
la mise en butée d'un premier élément métallique (91) et d'un second élément métallique (92) l'un contre l'autre sous une forme de L ou de T,
l'élévation de la température d'un fil (50),
l'apport du fil chauffé à une partie formant coin intérieur (90) constituée par le premier élément métallique et le second élément métallique en butée l'un contre l'autre, et
l'emmanchement à force d'un pion de malaxage (21) en rotation dans la partie formant coin intérieur afin de créer un joint soudé entre le premier élément métallique, le second élément métallique et le fil par soudage par friction-malaxage, **caractérisé en ce que** ledit procédé est mis en oeuvre au moyen d'un dispositif de soudage par friction-malaxage (1) selon l'une quelconque des revendications 1 à 9.

11. Procédé de fabrication d'une structure métallique selon la revendication 10, dans lequel :
le premier élément métallique est constitué dans un alliage d'aluminium de série A2000,
le second élément métallique est constitué dans un alliage d'aluminium de série A7000, et
le fil est constitué dans un alliage d'aluminium de série A2000 ou un alliage d'aluminium de série A7000.
